# EUROPÄISCHE PATENTSCHRIFT

(11) **EP 1 122 138 B1**
(45) Veröffentlichungstag und Bekanntmachung des Hinweises auf die Patenterteilung: **14.06.2006**
(21) Anmeldenummer: 01102079.9
(22) Anmeldetag: 31.01.2001
(51) Int. Cl.: B60S 1/48, B60S 1/56, B60S 1/60, B60S 1/52

(54) **Verfahren zur Reinigung von Scheiben eines Kraftfahrzeuges**
Method for cleaning vehicle windows
Méthode de nettoyage de vitres d'un véhicule

(30) Priorität: 04.02.2000 DE 10005022
(43) Veröffentlichungstag der Anmeldung: 08.08.2001
(73) Patentinhaber: Hella KGaA Hueck & Co., 59552 Lippstadt (DE)
(72) Erfinder: Chudaska, Andreas, 59597 Erwitte (DE); Hendrischk, Wolfgang, 59494 Soest (DE)

(56) Entgegenhaltungen:
- EP-A- 0 820 911
- DE-A- 2 236 216
- DE-A- 4 130 892
- DE-A- 4 426 051
- FR-A- 2 605 906
- FR-A- 2 671 773
- FR-A- 2 682 658
- FR-A- 2 759 337
- PATENT ABSTRACTS OF JAPAN vol. 017, no. 031 (M-1356), 21. Januar 1993 (1993-01-21) -& JP 04 254236 A (ALPINE ELECTRON INC), 9. September 1992 (1992-09-09)

## Beschreibung

Die Erfindung betrifft ein Verfahren zur Reinigung von Scheiben eines Kraftfahrzeuges nach dem Oberbegriff des Patentanspruchs 1.

Aus der DE 44 26 051 A1 ist eine Vorrichtung zur Reinigung von Scheiben eines Kraftfahrzeuges bekannt, bei der ein mit mindestens einer Düse versehener Schwenkarm vorgesehen ist, der im wesentlichen in einem konstanten Abstand zu der zu reinigenden Scheibe verschwenkt wird. Dadurch, dass die Düsen die Scheibenfläche in einem konstanten Abstand überstreichen, kann ein gleichbleibend gutes Reinigungsergebnis erzielt werden. Nachteilig an der bekannten Vorrichtung ist jedoch, dass keine Maßnahmen vorgesehen sind, um lediglich vorgegebene Teilbereiche der Scheibenfläche mit einem Reinigungsmedium zu beaufschlagen.

Aus der DE 196 30 421 C1 ist eine Vorrichtung zur Reinigung von Scheiben eines Kraftfahrzeuges bekannt, bei der eine Düse an einem Ende eines stabförmigen Tragelementes gehaltert ist. Die Düse bzw. das Tragelement werden von einer Ausgangsposition in eine Reinigungsposition translatorisch bewegt, wobei die Scheibe in der Reinigungsposition flächig mit einem Reinigungsmedium beaufschlagt wird. Auch diese bekannte Vorrichtung sieht keine Maßnahmen vor, um lediglich Teilbereiche der Scheibe mit Reinigungsmedium zu beaufschlagen.

Aus der WO 98/21076 A1 ist eine Vorrichtung zur Reinigung von Scheiben eines Kraftfahrzeuges bekannt, wobei ein mit mindestens einer Düse versehenes Tragelement schwenkbar gelagert ist. Das Tragelement wird im Wesentlichen in einem konstanten Abstand zu der Scheibe bewegt, wobei die Düsen jeweils Teilbereiche der Scheibe mit Reinigungsmedium beaufschlagen können.

Aus der DE-A-2 236 216 ist eine Vorrichtung zur Reinigung von Scheiben eines Kraftfahrzeuges bekannt, bei der eine Düse zum Sprühen eines Reinigungsmediums auf die Scheibe an einem als Wischerelement ausgebildeten Tragelement angeordnet ist. In Abhängigkeit von der Stellung des Wischerelementes wird das Reinigungsmedium auf die Scheibe aufgespritzt. Die Düse befindet sich jedoch stets in einer festen Relativlage zu dem Wischerelement.

Aus der EP 0 820 911 A2 ist ein Verfahren zur Reinigung von Scheiben eines Kraftfahrzeuges bekannt, bei dem eine Düse und ein dieselbe tragendes Tragelement entsprechend einer translatorischen und/oder rotatorischen Bewegung zusammen verfahren werden. Eine Relativbewegung zwischen der Düse und dem Tragelement ist nicht vorgesehen.

Aufgabe der vorliegenden Erfindung ist es daher, ein Verfahren zur Reinigung von Scheiben eines Kraftfahrzeuges anzugeben, dass unter Einsatz einer möglichst geringen Menge von Reinigungsmedium schnell und zuverlässig vorgegebene Teilbereiche der Scheibe gereinigt wird.

Zur Lösung dieser Aufgabe weist das erfindungsgemäße Verfahren die Merkmale des Patentanspruchs 1 auf.

Weitere Vorteile der Erfindung ergeben sich aus den weiteren Unteransprüchen.

Ein Ausführungsbeispiel der Erfindung wird nachfolgend anhand der Zeichnungen näher erläutert.

Es zeigen:
- Figur 1: ein Blockschaltbild einer Vorrichtung,
- Figur 2: eine Draufsicht auf ein Kraftfahrzeug,
- Figur 3: eine perspektivische Ansicht eines vorderen linken Scheinwerfers gemäß Figur 2 in Richtung A gesehen,
- Figur 4: eine schematische Seitenansicht des Scheinwerfers gemäß Figur 2 in Richtung Pfeil B nach Figur 2,
- Figur 5: ein Zeitliniendiagramm entsprechend einem Steuerprogramm nach einer ersten Variante und
- Figur 6: ein Zeitliniendiagramm entsprechend einem Steuerprogramm nach einer zweiten Variante.

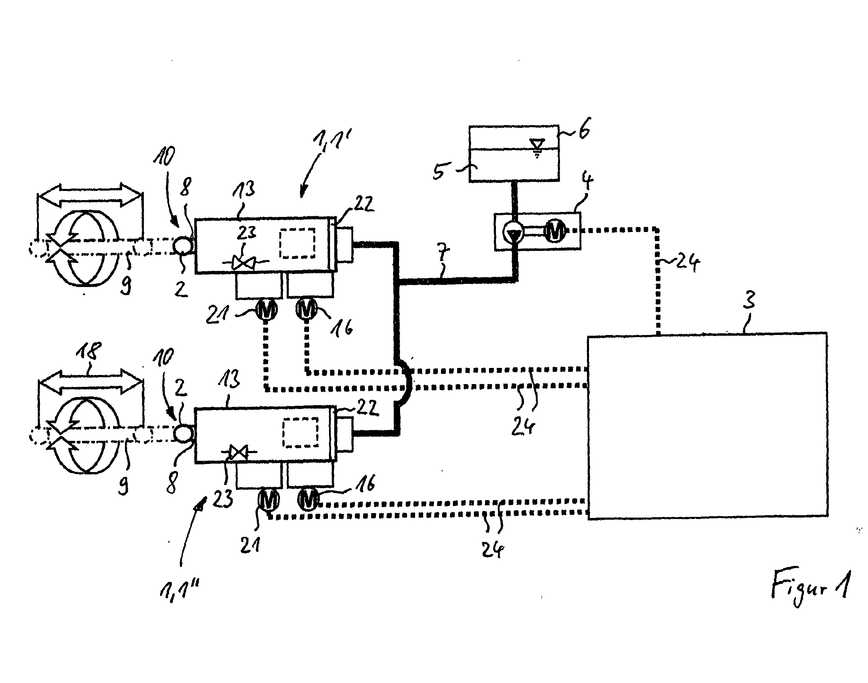

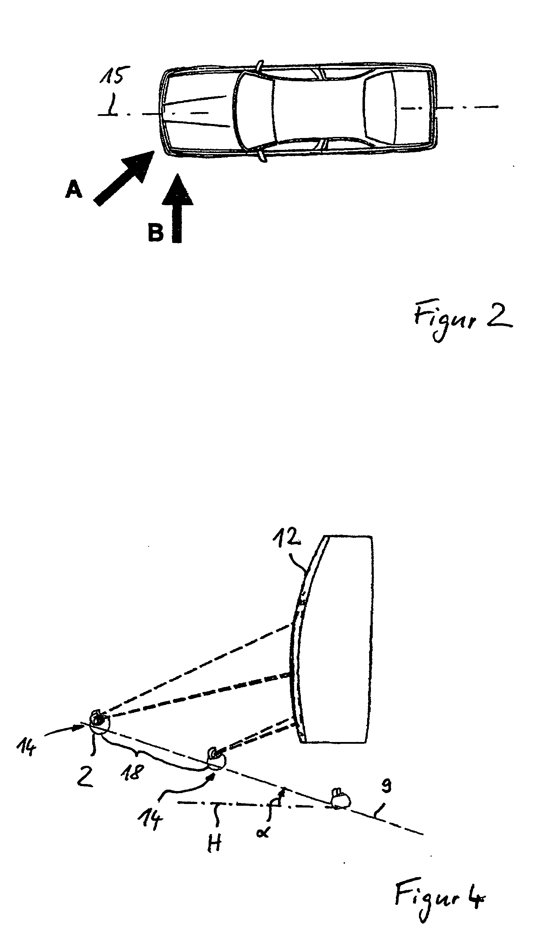

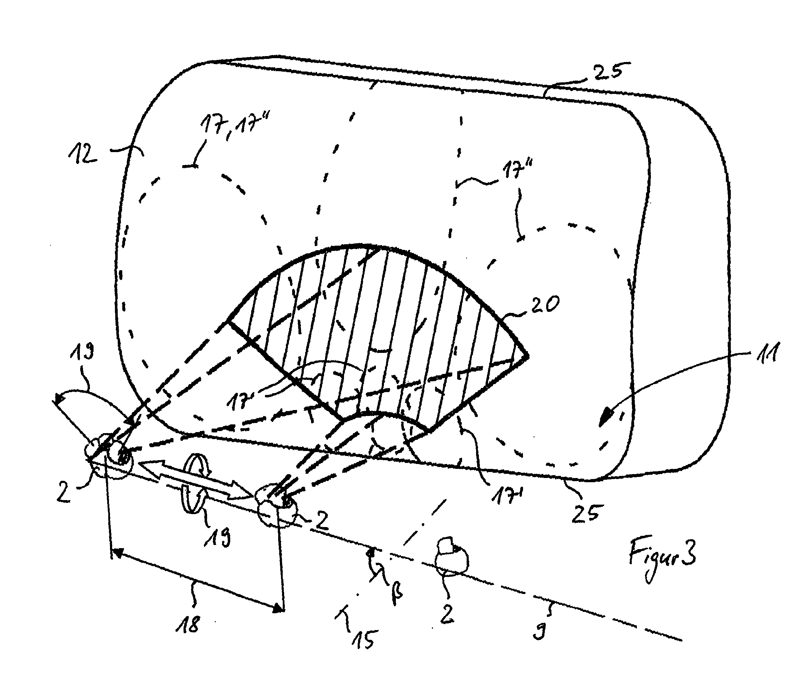

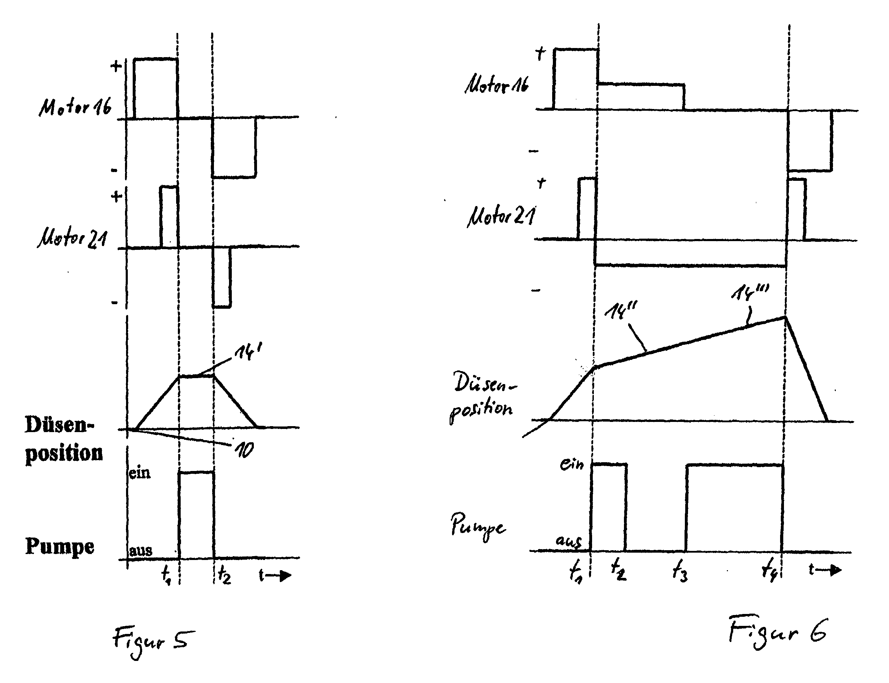

In Figur 1 ist schematisch eine Scheinwerferreinigungsanlage für ein Kraftfahrzeug als Vorrichtung zur Reinigung von Scheiben dargestellt, die im Wesentlichen aus einer Stelleinrichtung 1 für eine Düse 2, einer Steuereinheit 3, einer Pumpe 4 und einem als Reservoir für ein Reinigungsmedium 5 dienenden Vorratsbehälter 6 besteht. Das Reinigungsmedium 5 ist vorzugsweise als Waschflüssigkeit ausgebildet, die über eine verzweigte Zuleitung 7 mittels der Pumpe 4 zu den jeweils einem Scheinwerfer zugeordneten Stelleinrichtungen 1, 1', 1" förderbar ist.

Die Stelleinrichtungen 1', 1" weisen jeweils einen geradlinig verfahrbaren Stellkolben 8 als Tragelement für die Düse 2 auf. Die Düse 2 ist vorzugsweise an einem freien Ende des Stellkolbens 8 positioniert und drehbar um die Längsachse des Stellkolbens 8 bzw. eines durch diesen ausgeführten Verfahrweges gelagert. Wie besser aus Figur 3 und Figur 4 zu ersehen ist, befindet sich die Düse 2 in einer Ausgangsposition 10 des Stellkolbens 8 in einem unteren Eckbereich 11 einer Scheinwerfer-Abdeckscheibe 12. Ein Gehäuse 13 der Stelleinrichtung 1 ist derart positioniert, dass der Stellkolben 8 in einem spitzen Winkel α bezüglich einer Horizontalen H ausgefahren werden kann. Der Winkelbereich liegt vorzugsweise zwischen 10 und 40 Grad, vorzugsweise 20 Grad.

Beim Verfahren des Stellkolbens 8 in eine vorgegebene Reinigungsposition 14 weist dieser eine Bewegungskomponente sowohl in Richtung als auch quer zu einer Fahrzeuglängsachse 15 auf. Die resultierende Bewegungskomponente schließt mit der Fahrzeuglängsachse 15 einen spitzen Winkel β ein, vorzugsweise in einem Bereich zwischen 50 und 80 Grad. Die Größe des Winkels β ist abhängig von der Größe der Scheibe 12 und darf nicht zu klein gewählt werden, da ansonsten der Abstand zu der Scheibe 12 zu groß wird.

Der Reinigungsvorgang der Scheibe 12 kann erst beginnen, sobald der Stellkolben 8 mittels eines durch die Steuereinheit 3 angesteuerten Motors 16 in eine Position verfahren worden ist, in der die Düse 2 vor der Abdeckscheibe 12 angeordnet und einen Teilbereich 17 derselben durch Besprühen des Reinigungsmediums 5 beaufschlagen kann. Nunmehr beginnt ein Arbeitsbereich 18 der Düse 2, der durch die kombinierte Bewegung des Stellkolbens 8 in Pfeilrichtung und durch die Rotation der Düse 2 bezüglich des Stellkolbens 8 gemäß Pfeilrichtung 19 gekennzeichnet ist.

Wie aus Figur 3 deutlich wird, kann durch Verfahren des Stellkolbens 8 innerhalb des Reinigungsbereiches 18 in Kombination mit der Verdrehung der Düse 2 jeder vorgegebene Teilbereich 17, 17', 17" erfasst werden. Dabei werden in einem Anfangsbereich des Reinigungsbereiches 18 durch Rotation der Düse 2 kreis- oder ellipsenförmige kleine Teilbereiche 17' und in einem Endbereich des Reinigungsbereiches 18 großflächige Teilbereiche 17" erfasst. Die Mittellinien der auf diese Teilbereiche 17', 17" gerichteten Sprühkegel der Düse 2 sind Bestandteil einer Grenzlinie 20, die eine schraffierte Fläche begrenzt, innerhalb derer die auf die Scheibe 12 projizierten möglichen Mittellinien der Sprühkegel einstellbar sind. Somit ist eine große Variationsbreite gegeben, so dass mittels eines in der Steuereinheit 3 implementierten Steuerprogramms eine Mehrzahl von unterschiedlich dimensionierten und positionierten Teilbereichen 17 der Scheibe 12 durch den Sprühkegel der Düse 2 erfasst werden können. Dabei korrespondieren die Teilbereiche 17 zu bestimmten Funktionen des Scheinwerfers, beispielsweise Lichtfunktionen wie Abblendlicht bzw. Femlicht, oder Sensoren, wie beispielsweise Schmutz- oder Abstandssensoren.

Vorzugsweise ist die Düse 2 starr mit dem Stellkolben 8 verbunden. Die Drehbewegung der Düse 2 wird dabei durch Verdrehung des Stellkolbens 8 um seine Längsachse relativ zu dem Gehäuse 13 bewirkt. Alternativ kann die Düse 2 auch gelenkig zu dem Stellkolben 8 angeordnet sein. Dies würde jedoch ein konstruktiv höheren Aufwand bedeuten.

Durch Ausgestaltung des Steuerprogramms kann gezielt eine sequentielle Reinigung der Teilbereiche 17 der Scheibe 12 gewährleistet sein. Dabei kann berücksichtigt werden, dass die Anforderungen an die Sauberkeit der Teilbereiche 17 bei bestimmten Funktionen höher sind. Durch wiederholtes, in kurzen oder großen Zeitabständen Beaufschlagen solcher Teilbereiche 17 kann mit sparsamem Einsatz von Reinigungsmedium 5 ein die Funktion ermöglichender Zustand aufrechterhalten werden.

Figur 5 zeigt ein Zeitliniendiagramm, aus dem ersichtlich ist, wie der Motor 16 für den Stellkolben 8 und ein Motor 21 für die Düse 2 durch die Steuereinheit 3 angesteuert werden. In der Ausgangsposition 10 des Stellkolbens 8 bewirkt ein in dem Gehäuse 13 integriertes Verriegelungselement 22, dass bei aktivierter Pumpe 4 das Reinigungsmedium 5 am Durchtritt zu der Düse 2 gehindert wird. Im einfachsten Fall kann das Verriegelungselement 22 als ein Dichtring ausgebildet sein, der an einem der Düse 2 abgewandten Ende des Stellkolbens 8 angeordnet ist und die Zufuhr in der Ausgangsposition 10 des Stellkolbens 8 in das Gehäuse 13 versperrt.

Zur Erreichung einer vorgegebenen Reinigungsposition 14' wird nach einem Steuerprogramm zum einen der Motor 16 des Stellkolbens 8 betätigt und zum anderen mit zeitlicher Verzögerung der Motor 21 der Düse 2, so dass in einem Zeitpunkt t₁ die Reinigungsposition 14' erreicht ist. Gleichzeitig mit Abschalten der Motoren 16 und 21 wird die Pumpe 4 betätigt, so dass ein vorgegebener Teilbereich 17 der Scheibe 12 mit Reinigungsmedium 5 beaufschlagt werden kann. Am Ende des Reinigungsvorgangs zum Zeitpunkt t₂ wird die Pumpe 4 abgeschaltet und die Motoren 16 und 21 in umgekehrter Richtung betätigt, bis die Düse 2 bzw. der Stellkolben 8 zurück in die Ausgangsposition 10 zurückverfahren worden ist. Nach dieser Variante werden die zu reinigenden Teilbereiche 17 sequentiell angefahren, wobei zwischen den Reinigungsvorgängen der Stellkolben 8 die Ausgangsposition 10 einnimmt.

Nach einer weiteren Variante gemäß Figur 6 können mehrere Teilbereiche 17 auch während der Bewegung der Düse 2 bzw. des Stellkolbens 8 in dem Arbeitsbereich 18 nacheinander beaufschlagt werden. Entsprechend der vorhergehenden Variante werden die Motoren 16 und 21 nacheinander angesteuert, bis zum Zeitpunkt t₁ eine vorgegebene Reinigungsposition 14" eingenommen wird. Diese Reinigungsposition 14" ist dadurch gekennzeichnet, dass zum einen die Pumpe 4 eingeschaltet ist und zum anderen der Motor 16 und 21 weiterbetätigt wird, so dass der Stellkolben 8 weiter ausgefahren wird. Hierdurch kann ein größerer Teilbereich 17 erfasst werden. Nach Beendigung des Reinigungsvorgangs zum Zeitpunkt t₂ bewegen sich sowohl der Stellkolben 8 als auch die Düse 2 kontinuierlich weiter, bis zum Zeitpunkt t₃ eine weitere Reinigungsposition 14''' erreicht ist, in dem ein weiterer Teilbereich 17 beaufschlagt wird. In dieser Reinigungsposition 14''' rotiert die Düse weiter, so dass der zu reinigende Teilbereich 17 im Wesentlichen in vertikaler Richtung erweitert wird. Nach Beendigung dieses Reinigungsvorganges zum Zeitpunkt t₄ werden die Düse 2 und der Stellkolben 8 in ihre ursprüngliche Ausgangsposition 10 zurückverfahren.

Zweckmäßiger Weise weist das Gehäuse 13 ein Auslaufschutz-Ventil 23 auf, damit ein Entweichen des Reinigungsmediums 5 bei nicht betätigter Pumpe 4 verhindert wird. Das Auslaufschutz-Ventil 23 kann als Druckschaltventil ausgebildet sein. Falls der Vorratsbehälter 6 unterhalb der Gehäuse 13 der Stelleinrichtung 1 angeordnet ist, kann dieses Auslaufschutz-Ventil 23 entfallen.

Die Motoren 16, 21 sind mittels Steuerleitungen 24 mit der Steuereinheit 3 verbunden. Die Steuereinheit 3 weist ein Steuerprogramm auf, mittels dessen die Stelleinrichtungen 1', 1" nacheinander angesteuert werden. Durch die jeweils gleichzeitige Ansteuerung von zwei Motoren 16, 21 einer Stelleinrichtung 1' oder 1" kann schnell und unter Minimierung des Reinigungsmediumsverbrauchs 5 eine zuverlässige Reinigung vorgegebener Teilbereiche 17 erfolgen.

Alternativ kann die Verdrehbewegung der Düse 2 auch an gegenüberliegenden Randkanten 25 der Scheibe 12 ausgerichtet sein. Dies kann sinnvoll sein bei einer asymmetrischen Kontur des Scheinwerfers oder bei einer zu einer Randkante der Abdeckscheibe 12 parallelen Verstellung des Stellkolbens 8.

## Patentansprüche

1. Verfahren zur Reinigung von Scheiben eines Kraftfahrzeuges, insbesondere für Scheinwerfer, wobei eine an einem Tragelement (8) angebrachte Düse (2) zusammen mit dem Tragelement (8) aus einer Ausgangsposition in eine vorgegebene Reinigungsposition bewegt wird, wobei die Scheibe (12) durch eine kombinierte Bewegung des Tragelementes (8) in translatorischer Richtung einerseits und der Düse (2) in rotatorischer Richtung andererseits gereinigt wird, **dadurch gekennzeichnet, dass** in Abhängigkeit von der Position des Tragelementes (8) sequentiell mehrere im Wesentlichen voneinander abgegrenzte Teilbereiche (17, 17', 17") der Scheibe (12) mit dem aus der Düse (2) zu sprühenden Reinigungsmedium (5) beaufschlagt werden.

2. Verfahren nach Anspruch 1, **dadurch gekennzeichnet, dass** das Tragelement (8) und die Düse (2) derart bewegt werden, dass in einem Anfangsbereich kreis- oder ellipsenförmige kleine Teilbereiche (17') und in einem Endbereich großflächige Teilbereiche (17") der Scheibe (12) durch die Düse (2) erfasst werden.

3. Verfahren nach Anspruch 1 oder 2, **dadurch gekennzeichnet, dass** die Düse (2) quer zu dem Verfahrweg (9) des Tragelementes (8) verdreht wird.

## Claims

1. Method for cleaning glass shields of a motor vehicle, in particular headlight glass, a nozzle (2) mounted on a support element (8) being moved together with the support element (8) from a starting position to a predefined cleaning position and the glass shield (12) being cleaned by means of a combined movement of the support element (8), firstly in a translational direction and secondly in a rotational direction of the nozzle (2), **characterised in that**, in dependence on the position of the support element (8), a plurality of substantially mutually demarcated partial areas (17, 17', 17") of the glass shield (12) are impinged upon sequentially by the cleaning medium (5) to be sprayed from the nozzle (2).

2. Method according to claim 1, **characterised in that** the support element (8) and the nozzle (2) are moved in such a way that, in a starting area, small circular or elliptical partial areas (17') and, in a finishing area, large partial areas (17") of the glass shield (12) are impinged upon by means of the nozzle (2).

3. Method according to claim 1 or 2, **characterised in that** the nozzle (2) is rotated transversely with respect to the travel path (9) of the support element (8).

## Revendications

1. Procédé de nettoyage de vitres d'un véhicules automobile, notamment pour des phares, une buse (2) montée sur un élément porteur (8) étant déplacée en commun avec l'élément porteur (8) d'une position initiale dans une position de nettoyage prédéfinie, la vitre (12) étant nettoyée par un déplacement associé de l'élément porteur (8) en translation d'une part et de la buse (2) en rotation d'autre part, **caractérisé en ce qu'**en fonction de la position de l'élément porteur (8), plusieurs zones partielles (17, 17', 17") de la vitre (12) sensiblement délimitées mutuellement sont soumises à l'agent de nettoyage (5) devant être vaporisé hors de la buse (2).

2. Procédé selon la revendication 1, **caractérisé en ce que** l'élément porteur (8) et la buse (2) sont déplacés de façon à ce que dans une zone initiale, des petites zones partielles circulaires ou elliptiques (17') et dans une zone d'extrémité, des zones partielles étendues (17") de la vitre (12) soient couvertes par la buse (2).

3. Procédé selon la revendication 1 ou 2, **caractérisé en ce que** la buse (2) est en rotation par rapport à la course de déplacement (9) de l'élément porteur (8).
